## Europäisches Patentamt
## European Patent Office
## Office européen des brevets

(11) Numéro de publication: **0 130 886**
**B1**

(12)
# FASCICULE DE BREVET EUROPÉEN

(45) Date de publication du fascicule du brevet:
**25.10.89**

(51) Int. Cl.⁴: **B 32 B 17/10, C 03 C 27/12**

(21) Numéro de dépôt: **84401290.6**

(22) Date de dépôt: **21.06.84**

(54) **Vitrage de sécurité, en particulier vitrage anti-balles.**

(43) Date de publication de la demande:
**09.01.85 Bulletin 85/2**

(45) Mention de la délivrance du brevet:
**25.10.89 Bulletin 89/43**

(84) Etats contractants désignés:
**AT BE CH DE FR GB IT LI LU NL SE**

(56) Documents cité:
**EP-A-0 003 432**
**FR-A-2 181 635**
**FR-A-2 501 580**

(73) Titulaire: **SAINT- GOBAIN VITRAGE, "Les Miroirs"**
**18, avenue d'Alsace, F-92400 Courbevoie (FR)**
(84) Etats contractants désignés:
**BE CH FR GB IT LI LU NL SE AT**

(73) Titulaire: **VEGLA Vereinigte Glaswerke GmbH,**
**Viktoriaallee 3-5, D-5100 Aachen (DE)**
(84) Etats contractants désignés: **DE**

(72) Inventeur: **Leyens, Gerd, Im Grünental 90, D-5100**
**Aachen (DE)**
Inventeur: **Pikhard, Siegfried, Hauptstrasse 137,**
**D-5106 Roetgen (DE)**
Inventeur: **Linden, Ludwig, Josefstrasse 28, D-5100**
**Aachen (DE)**
Inventeur: **Van der Meulen, Rudolf, Kronenberg 91,**
**D-5100 Aachen (DE)**
Inventeur: **Bayer, Herbert, Von Coels- Strasse 41,**
**D-5100 Aachen (DE)**

(74) Mandataire: **Muller, René, SAINT- GOBAIN**
**RECHERCHE 39, quai Lucien Lefranc, F-93304**
**Aubervilliers (FR)**

EP 0 130 886 B1

## Description

La présente invention est relative à un vitrage de sécurité, et en particulier, un vitrage anti-balles pour véhicules automobiles, qui comprend au moins deux feuilles de verre de silicate collées par une ou plusieurs couches intercalaires en matière plastique, et, sur la face arrière de la feuille de verre orientée vers l'intérieur, une feuille supplémentaire en une matière plastique, qui, en particulier, peut être une matière possédant une bonne résistance aux chocs, comme le polycarbonate.

Dans la suite de la description, on désignera par feuille intérieure, une feuille destinée, dans un véhicule automobile, à être orientée vers l'intérieur de l'habitacle.

On connaît différentes formes de réalisation de vitrages de sécurité, comprenant au moins une feuille de verre à laquelle est collée une plaque de polycarbonate. Grâce aux très bonnes qualités mécaniques du polycarbonate, des structures, même relativement minces, de ce type, ont déjà fait preuve de bonnes propriétés de résistance aux sollicitations mécaniques.

Ainsi, par exemple, le brevet américain US-3 624 238 décrit une structure feuilletée comprenant des feuilles de verre et des plaques de polycarbonate dans laquelle une plaque de polycarbonate est placée entre deux feuilles de verre, de sorte que les feuilles de verre constituent les feuilles externes de la structure. Dans une telle structure, toutefois, des quantités plus ou moins importantes d'éclats de verre peuvent être projetées à l'arrière du vitrage en cas de choc, engendrant des risques non négligeables.

Lorsqu'on souhaite toutefois éviter à tout coup d'éventuelles projections d'éclats de verre vers l'intérieur, on peut utiliser un vitrage du type mentionné ci-dessus, mais dans lequel la plaque de polycarbonate est orientée vers l'intérieur de l'habitacle. Une telle structure est décrite par exemple dans la publication de brevet allemand DE-OS-2 039 452. La face de la plaque de polycarbonate qui reste libre n'étant pas à elle seule suffisamment résistante aux rayures, elle est éventuellement garnie d'une feuille supplémentaire beaucoup plus résistante. Ainsi on connaît déjà, par exemple par la publication de brevet allemand DE-OS-2 851 394, une structure où la plaque de polycarbonate est revêtue d'une couche en polyuréthane souple et élastique qui présente des propriétés d'autocicatrisation.

La liaison entre la feuille de verre et la plaque de polycarbonate est assurée au moyen d'une couche adhésive appropriée. Une couche en polyuréthane thermoplastique et transparent convient particulièrement bien, mais on se reportera avec profit aux publications de brevet allemand DE-AS-1 594 164 et DE-AS-2 660 346, par exemple, pour choisir d'autres types d'adhésif se prêtant à cette application.

Lorsque des vitrages anti-balles présentent une telle structure assymétrique, des problèmes surgissent en raison des différences de dilatation thermique entre la feuille en matière plastique orientée vers l'intérieur d'une part et la feuille de verre d'autre part. Dans le cas présent, le coefficient de dilatation thermique de la matière plastique a une valeur multiple de celle du verre, et il en résulte à la jonction des contraintes de cisaillement considérables. A température ambiante ou à haute température, on peut éviter des déformations des vitrages feuilletés en augmentant la quantité ou l'épaisseur des feuilles de verre. On diminue ainsi les contraintes internes qui se produisent à l'intérieur de la couche adhésive déformable à cette température.

A basse température toutefois, on ne parvient plus à diminuer les contraintes internes pour deux raisons: d'une part, elles varient en sens inverse de la température et d'autre part, la couche adhésive n'est plus déformable à ces températures. Elle agit alors dans le même sens que la plaque de polycarbonate et contribue pour sa part à l'augmentation des contraintes de cisaillement qui agissent sur la feuille de verre. La déformation résultante de la feuille de verre est si considérable que, suivant la structure choisie, elle provoque sa rupture à une température plus ou moins basse en-dessous de 0°C.

Plus particulièrement en ce qui concerne les vitrages anti-balles pour véhicules automobiles, il est impératif d'obtenir une structure la plus mince possible, mais qui présente cependant une résistance au froid élevée. Les structures décrites jusqu'à présent ne satisfont pas cette exigence.

La présente invention se propose donc de fournir un vitrage feuilleté anti-balles convenant particulièrement bien pour les véhicules automobiles, et qui résiste efficacement à des conditions de température assez basses. Un objet de l'invention est de proposer des vitrages qui, malgré une structure relativement mince, conservent, même à basse température, leur résistance à la flexion, c'est-à-dire présentent en toutes circonstances une flèche assez faible pour les préserver des risques de rupture sous l'effet du froid.

Pour répondre à ces objectifs, l'invention propose une structure feuilletée comprenant au moins deux feuilles de verre de silicate collées, par une ou plusieurs feuilles intercalaires en matière plastique et sur l'une des feuilles de verre extrêmes, une feuille supplémentaire d'au moins 1 mm d'épaisseur environ, en une matière plastique possédant une bonne résistance aux chocs comme le polycarbonate et collée par l'intermédiaire d'une couche adhésive dans laquelle une feuille intercalaire disposée du côté opposé à la face de ladite feuille de verre extrême revêtue de la feuille résistant aux chocs présente une composition et une épaisseur choisies de telle façon qu'elle exerce sur ladite feuille de verre extrême, lors de sa contraction à basse température, des contraintes de cisaillement de même signe et de valeur du même ordre que celles transmises à ladite feuille de verre par ladite feuille en matière plastique résistant aux chocs par l'intermédiaire de la couche adhésive.

De cette façon, les contraintes de cisaillement qui agissent de chaque côté de ladite feuille de verre extrême s'équilibrent sensiblement et on évite une déformation excessive du vitrage.

Selon l'invention, on choisit les dimensions ou la composition des couches qui constituent le vitrage feuilleté de façon à ce que, en ce qui concerne la feuille de verre extrême à laquelle adhère par exemple une plaque de polycarbonate, on soit en présence d'une certaine symétrie des comportements mécaniques, d'une part de la plaque de polycarbonate, et d'autre part, de la feuille en matière plastique située de l'autre côté de la feuille de verre. Alors que antérieurement, on a tenté de renforcer la résistance à la flexion des structures à base de verre de silicate, ou, dans le même ordre d'idée, d'utiliser une couche adhésive molle de façon à maîtriser les contraintes dans la couche adhésive, selon l'invention, on absorbe cette flexion permanente en introduisant volontairement, grâce à la présence d'une feuille déterminée, de l'autre côté de la feuille de verre extrême, des contraintes de cisaillement qui équilibrent celles dues à la présence, sur l'autre face, de la plaque de polycarbonate.

Dans une réalisation de l'invention, la feuille induisant des contraintes, qui est généralement une feuille monocouche, est placée directement sur la face de la feuille de verre extrême opposée à la face recouverte par la plaque de polycarbonate.

Plus précisément, ladite feuille est la feuille qui colle la feuille de verre extrême à une autre feuille de verre de la structure feuilletée.

Il n'est pas nécessaire, dans la pratique, de parvenir à un équilibrage total des contraintes de cisaillement puisqu'il est évident que la raideur propre du verre absorbe une partie de la déformation. Dans la plupart des cas, c'est à dire avec des matériaux de raideur suffisante ayant un coefficient de dilatation thermique approprié, il suffit de prévoir une couche dont l'épaisseur est plus faible que celle de la couche résistant aux chocs augmentée de celle de la couche adhésive qui la lie à la feuille de verre. En désignant par $d_1$ l'épaisseur de la couche résistant aux chocs, par $d_2$ celle de la couche adhésive, on peut considérer en pratique qu'on atteint, avec des matériaux tels que polyvinylbutyrol, polyuréthane thermoplastique, polycarbonate, une résistance au froid suffisante lorsque l'épaisseur D de la couche déposée de l'autre côté de la feuille de verre est au moins égale, et de préférence supérieure, à $\frac{d_1 + d_2}{2}$.

Selon une caractéristique avantageuse de l'invention, $d_2$ a une valeur d'au moins 1,5 mm et de préférence environ 2 mm, le module d'élasticité de la matière adhésive ayant à 20°C, une valeur maximale de 20 N/mm², l'épaisseur $d_1$ de la plaque de polycarbonate est de préférence comprise entre 2 mm et 5 mm.

Si on utilise pour les différentes couches adhésives intercalaires des matières ayant des modules d'élasticité différents, il est avantageux, selon une caractéristique supplémentaire de l'invention, de former les couches permettant l'adhérence entre deux feuilles de verre avec la matière possédant le module plus élevé.

D'autres formes avantageuses de réalisation de l'invention apparaîtront au cours de la description suivante, en relation avec les figures 1 à 7 parmi lesquelles:

Les figures 1 et 2 montrent des vitrages feuilletés anti-balles tels qu'ils existent dans l'état de la technique.

Les figures 3 à 7 illustrent différentes formes de réalisation de structures de vitrages feuilletés anti-balles selon l'invention.

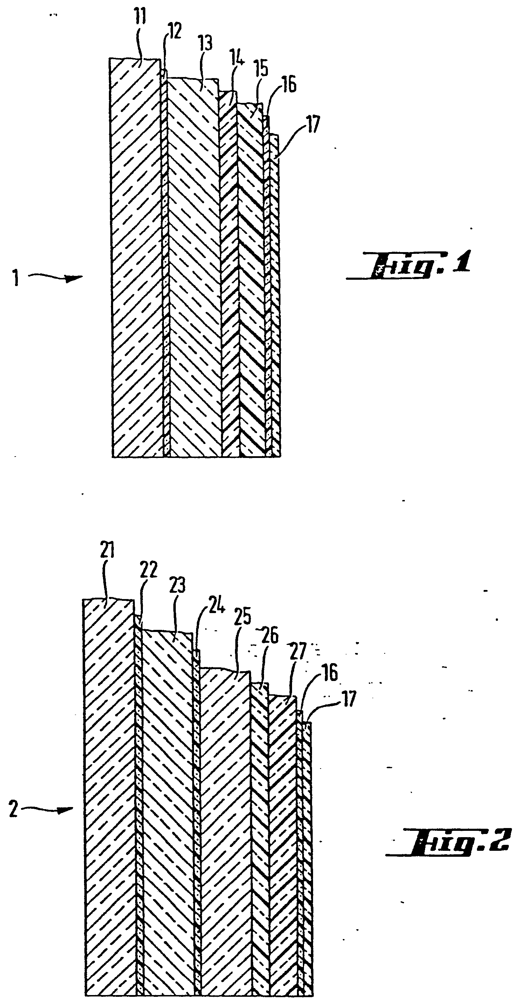

La structure feuilletée 1 représentée à la figure 1 se compose, de façon connue, d'une feuille de verre 11 de 6 mm d'épaisseur, d'une couche intercalaire 12 en polyvinylbutyral de 0,76 mm d'épaisseur, d'une deuxième feuille de verre 13, d'une couche adhésive 14 en un polyuréthane thermoplastique, qui permet l'assemblage de la feuille de verre 13 et d'une plaque 15 en polycarbonate de 3 mm d'épaisseur, d'une mince couche adhésive 16, et d'une couche 17 autocicatrisable en polyuréthane souple servant de couche anti-rayure pour la plaque 15 de polycarbonate.

Les matières employées citées ci-après pour constituer chaque feuille du vitrage feuilleté 1 peuvent également être utilisées pour les exemples de réalisation ultérieurement décrits.

Le polyvinylbutyral employé pour la feuille 12 est le produit SAFLEX SR 41 de la Société Monsanto. On utilise pour la couche adhésive 14 le polyuréthane thermoplastique décrit dans le brevet allemand DE-PS-2 660 346 par la Société Bayer AG. Le produit Makrolon de la Société allemande Röhm GmbH a été utilisé pour constituer la plaque de polycarbonate. On trouve dans la publication de brevet allemand DE-AS-2 629 779 la description détaillée de la composition de la feuille souple, de polyuréthane autocicatrisable 17. Tous les types de composition cités dans ce document font également partie de la présente description.

On place trois échantillons d'un vitrage feuilleté présentant la structure illustrée à la figure 1, de 50 cm de long et 5 cm de large, dans une armoire frigorifique à 20°C et on abaisse la température. Dès que la température atteint 0°C, tous les échantillons sont rompus.

La structure représenté à la figure 2 fait également partie de l'état de la technique. Les vitrages feuilletés anti-balles ainsi illustrés se composent de 3 feuilles de verre de 6 mm d'épaisseur 21, 23, 25 collées l'une à l'autre par des feuilles adhésives 22, 24, en polyvinylbutyral, de 0,76 mm d'épaisseur. Une feuille de polyuréthane thermoplastique 26 de 2 mm d'épaisseur, située à l'arrière de la feuille de verre 25, la fait adhérer à une plaque 27 de polycarbonate de 3 mm d'épaisseur. Une couche de protection 17 autocicatrisable en polyuréthane, garnie d'une couche adhésive 16, se trouve à l'arrière de la

plaque 27 en polycarbonate.

Comme précédemment, on place trois échantillons d'un tel vitrage de 50 cm de long sur 3 cm de large, dans une armoire frigorifique à température ambiante et on abaisse lentement la température. A -30°C, on ouvre l'armoire et on s'aperçoit que les trois échantillons sont détruits.

Les exemples suivants permettront une meilleure compréhension de l'invention, en relation avec le même type de tests de comportement à basse température.

### Exemple 1

On fabrique un vitrage feuilleté 3 ayant la structure représentée à la figure 3. Il se compose d'une feuille de verre 31 de 6 mm d'épaisseur, d'une feuille 32 de polyvinylbutyral de 3,8 mm d'épaisseur, d'une feuille de verre 33 de 6 mm d'épaisseur, d'une couche 34 de polyuréthane thermoplastique de 2 mm d'épaisseur, d'une plaque 35 de polycarbonate de 3 mm d'épaisseur, d'une couche adhésive 16 et d'une couche de protection 17 autocicatrisable. C'est la feuille 32 de polyvinylbutyral qui, par son épaisseur, sa composition et sa position par rapport à la plaque 35 de polycarbonate procure l'effet désiré selon l'invention.

On place dans une armoire frigorifique à température ambiante trois échantillons de 50 cm de long pour 5 cm de large d'un tel vitrage ayant une épaisseur d'environ 21,5 mm, et on abaisse lentement la température jusqu'à environ -40°C. Alors que les feuilles de verre de l'un des échantillons sont déjà rompues à 0°C, les autres sont encore intactes à -40°C. Les échantillons non endommagés se sont légèrement bombés au cours du refroidissement et la flèche entre les extrémités et le milieu des échantillons a dans un cas augmenté de 0,63 mm et dans l'autre de 0,66 mm.

### Exemple 2

On fabrique un vitrage feuilleté ayant la structure illustrée à la figure 4. Il comprend successivement une feuille de verre 41 de 6 mm d'épaisseur, une feuille 42 de polyuréthane thermoplastique de 4 mm d'épaisseur, une feuille de verre 43 de 6 mm d'épaisseur, une couche 44 de polyuréthane thermoplastique de 2 mm d'épaisseur, une plaque 45 de polycarbonate de 3 mm d'épaisseur, une couche adhésive 16 et une couche de protection 17 autocicatrisable. C'est, dans ce mode de réalisation, la feuille 42 qui remplit dans la structure décrite la fonction souhaitée.

On prépare de nouveau trois échantillons, d'une épaisseur totale de 21,7 mm, et on les soumet à l'épreuve du froid à -40°C. Tous passent l'épreuve sans endommagement notable. A -30°C, ils sont légèrement courbés par rapport à leur état à température ambiante, et la flèche a pour deux d'entre eux augmenté de 0,59 mm, et de 0,56 mm pour le troisième. En poursuivant le refroidissement au-delà de -30°C, on ne note pas d'augmentation de la flèche. On peut donc en déduire que ces structures supportent sans dommage des températures encore inférieures à -40°C.

### Exemple 3

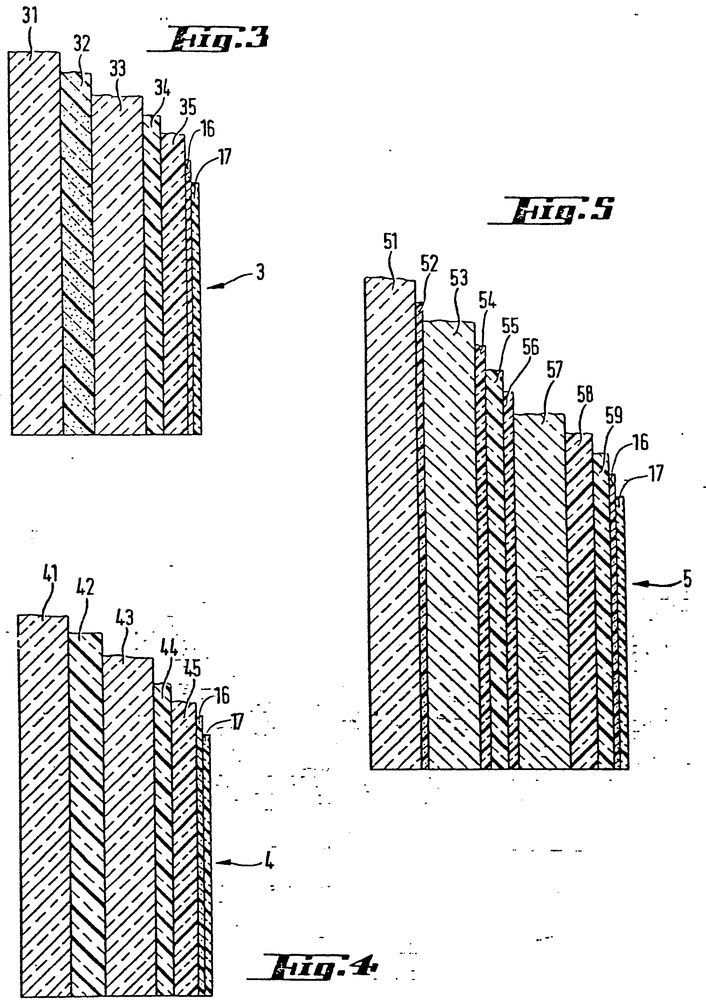

On fabrique une structure de vitrage feuilleté telle qu'illustrée à la figure 5, c'est-à-dire comprenant successivement: une feuille de verre 51 de 6 mm d'épaisseur, une feuille 52 de polyvinylbutyral de 0,76 mm d'épaisseur, une feuille de verre 53 de 6 mm d'épaisseur, une couche 54 de polyuréthane thermoplastique de 1,2 mm d'épaisseur, une plaque 55 de polycarbonate de 2 mm d'épaisseur, une couche 56 de polyuréthane thermoplastique de 1,2 mm d'épaisseur, une feuille de verre 57 de 6 mm d'épaisseur, une couche 58 de polyuréthane thermoplastique de 3,3 mm d'épaisseur, une plaque 59 de polycarbonate de 2 mm d'épaisseur, une couche adhésive 16 et une couche souple 17 antirayures et ayant des propriétés d'autocicatrisation.

Dans cette structure plus complexe, l'ensemble de couche 54, 55, 56, remplit la fonction souhaitée selon l'invention.

On soumet trois échantillons de ce type, ayant une épaisseur totale de 29 mm, à l'épreuve du froid jusqu'à -40°C. Tous supportent l'épreuve sans endommagement. Dans les trois cas, le refroidissement depuis la température ambiante jusqu'à - 30°C a provoqué une augmentation de la flèche de 0,1 mm. Après réchauffement à température ambiante, les échantillons retrouvent au bout de trois jours leur état d'origine.

### Exemple 4

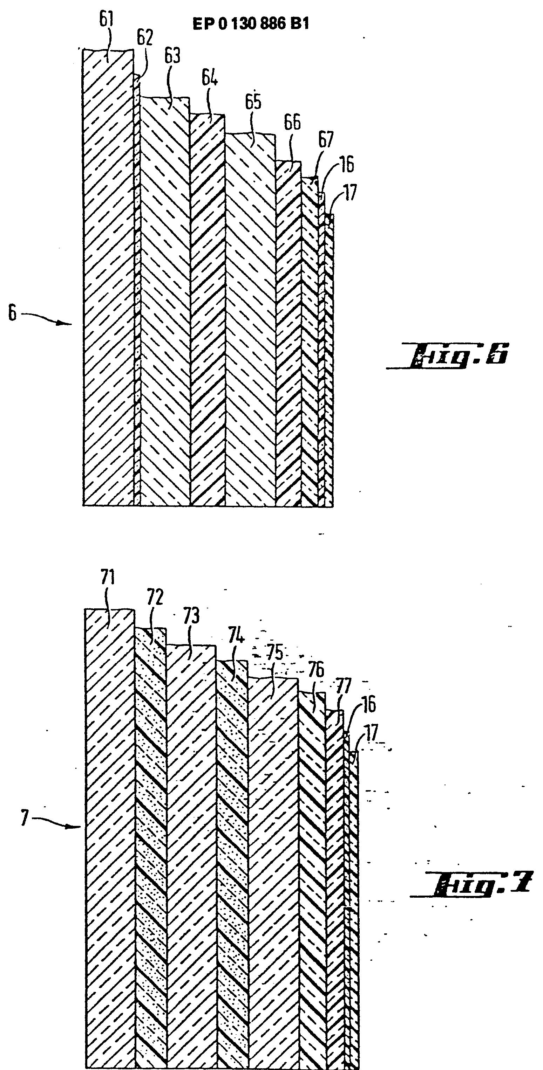

On fabrique une structure de vitrage feuilleté telle qu'illustrée à la figure 6, c'est-à-dire comprenant successivement: une feuille de verre 61 de 6 mm d'épaisseur, une couche 62 de polyvinylbutyral de 0,76 mm d'épaisseur, une feuille de verre 63 de 6 mm d'épaisseur, une couche 64 de polyuréthane thermoplastique de 4,2 mm d'épaisseur, une feuille de verre 65 de 6 mm d'épaisseur, une couche 66 de polyuréthane thermoplastique de 2 mm d'épaisseur, une plaque de polycarbonate 67 de 2 mm d'épaisseur, une couche adhésive 16 et une couche 17 anti-rayures ayant des propriétés d'autocicatrisation et une épaisseur de 0,5 mm.

On soumet trois échantillons de ce type, ayant une épaisseur totale de 28,5 mm à l'épreuve du froid jusqu'à - 40°C. Tous supportent l'épreuve sans dommage. Dans les trois cas, le refroidissement depuis la température ambiante jusqu'à

-30°C a provoqué une augmentation de la flèche de 0,2 mm. Après réchauffement à température ambiante, les échantillons retrouvent au bout de trois jours leur état d'origine.

**Exemple 5**

On fabrique le vitrage illustré à la figure 7, comprenant successivement: une feuille de verre 71 de 6 mm d'épaisseur, une feuille 72 de polyvinylbutyral de 3,8 mm d'épaisseur, une feuille de verre 73 de 6 mm d'épaisseur, une feuille 74 de polyvinylbutyral de 3,8 mm d'épaisseur, une feuille de verre 75 de 6 mm d'épaisseur, une couche 76 de polyuréthane thermoplastique de 2 mm d'épaisseur, une plaque 77 de polycarbonate de 2 mm d'épaisseur, une couche adhésive 16 et une couche anti-rayures 17 ayant des propriétés d'autocicatrisation et une épaisseur de 0,5 mm.

Après avoir soumis trois échantillons d'un tel vitrage à l'épreuve du froid, on obtient les mêmes résultats que ceux obtenus à l'exemple 4.

**Revendications**

1. Vitrage de sécurité, en particulier vitrage anti-balles pour véhicules automobiles, ayant une structure feuilletée asymétrique qui comprend au moins deux feuilles de verre de silicate collées par une ou plusieurs feuilles intercalaires en matière plastique, et, sur l'une des feuilles de verre extrêmes, une feuille supplémentaire d'au moins 1 mm d'épaisseur environ, en une matière plastique possédant une bonne résistance aux chocs comme le polycarbonate, et collée par l'intermédiaire d'une couche adhésive, caractérisé en ce qu'une feuille intercalaire disposée du côté opposé à la face de ladite feuille extrême de verre revêtue par la feuille résistant aux chocs, présente une épaisseur et une composition choisies de telle façon que, lors de sa contraction à basse température, ladite feuille intercalaire exerce sur ladite feuille de verre, sur sa face en regard, des contraintes de cisaillement de même signe et de valeur du même ordre que celles exercées sur l'autre face de ladite feuille de verre par ladite feuille résistant aux chocs, éventuellement munie d'une couche de protection.

2. Vitrage de sécurité selon la revendication 1, caractérisé en ce que l'épaisseur de ladite feuille intercalaire s'élève à au moins la moitié de l'épaisseur de ladite feuille en matière plastique résistant aux chocs augmentée de celle de ladite couche adhésive assurant le collage entre ladite feuille de verre extrême et ladite feuille résistant aux chocs.

3. Vitrage de sécurité selon l'une des revendications 1 ou 2, caractérisé en ce que ladite couche adhésive assurant le collage entre ladite feuille de verre extrême et ladite feuille résistant aux chocs est à base d'un polyuréthane thermoplastique transparent.

4. Vitrage de sécurité selon la revendication 3, caractérisé en ce que ladite couche adhésive assurant le collage entre ladite feuille de verre extrême et ladite feuille résistant aux chocs présente une épaisseur d'au moins 1,5 mm.

5. Vitrage de sécurité selon l'une des revendications 1 à 4, caractérisé en ce que ladite feuille intercalaire est placée directement sur la face de ladite feuille de verre intérieure opposée à la face recouverte par ladite feuille résistant aux chocs.

6. Vitrage de sécurité selon la revendication 5, caractérisé en ce que ladite feuille intercalaire est celle qui colle ladite feuille de verre extrême à une autre feuille de verre.

7. Vitrage de sécurité selon la revendication 6, caractérisé en ce que ladite feuille intercalaire est une feuille en polyvinylbutyral.

8. Vitrage de sécurité selon la revendication 6, caractérisé en ce que ladite feuille intercalaire est une feuille en polyuréthane thermoplastique.

9. Vitrage de sécurité selon la revendication 6, caractérisé en ce que les feuilles de verre sont collées grâce à une feuille comprenant une plaque de polycarbonate recouverte de chaque côté d'une couche de polyuréthane thermoplastique.

10. Vitrage de sécurité selon l'une des revendications 1 à 9, caractérisé en ce que la feuille en matière plastique résistant aux chocs est recouverte, par l'intermédiaire d'une couche adhésive (16) en polyuréthane, d'une feuille (17) de polyuréthane souple.

**Claims**

1. Safety pane, especially bullet-proof pane for automobile vehicles, having an asymmetric laminated structure which comprises at least two sheets of silicate glass glued together by one or more intermediate sheets of plastics material and, on one of the extreme glass sheets, a supplementary sheet of at least approximately 1 mm thickness of a plastics material having good shock resistance, such as polycarbonate, and glued by means of an adhesive layer, characterized in that an intermediate sheet disposed on the side of said extreme glass sheet opposite to the face covered by the shock-resistant sheet has a thickness and a composition so selected that, during its contraction at low temperature, said intermediate sheet exerts upon said glass sheet, on its facing face, shear stresses of the same sign and of the same order of value as those exerted upon the other face of said glass sheet by said shock-resistant sheet, which may perhaps be provided with a protective layer.

2. Safety pane according to claim 1, characterized in that the thickness of said intermediate sheet amounts to at least one-half of the thickness of said sheet of shock-resistant plastics material increased by the thickness of said adhesive layer providing the bond between said extreme glass sheet and said shock-resistant sheet.

3. Safety pane according to one of claims 1 or 2, characterized in that said adhesive layer providing the bond between said extreme glass sheet and said shock-resistant sheet is based upon a transparent thermoplastic polyurethane.

4. Safety pane according to claim 3, characterized in that said adhesive layer providing the bond between said extreme glass sheet and said shock-resistant sheet has a thickness of at least 1.5 mm.

5. Safety pane according to one of claims 1 to 4, characterized in that said intermediate sheet is placed directly on the face of said interior glass sheet opposite to the face covered by said shock-resistant sheet.

6. Safety pane according to claim 5, characterized in that said intermediate sheet is that which bonds said extreme glass sheet to another sheet of glass.

7. Safety pane according to claim 6, characterized in that said intermediate sheet is a sheet of polyvinyl butyral.

8. Safety pane according to claim 6, characterized in that said intermediate sheet is a sheet of thermoplastic polyurethane.

9. Safety pane according to claim 6, characterized in that the sheets of glass are glued together by means of a sheet comprising a plate of polycarbonate covered on each side with a layer of thermoplastic polyurethane.

10. Safety pane according to one of claims 1 to 9, characterized in that the sheet of shock-resistant plastics material is covered, through the intermediary of an adhesive layer (16) of polyurethane, with a sheet (17) of flexible polyurethane.

**Patentansprüche**

1. Sicherheitsglasscheibe, insbesondere durchschußhemmende Glasscheibe für Kraftfahrzeuge, mit asymmetrischen Schichtaufbau, aus wenigstens zwei mittels einer oder mehreren Zwischenschichten aus Kunststoff miteinander verbundenen Silikatglasscheiben und einer zusätzlichen wenigstens 1 mm dicken, unter Zwischenschaltung einer Klebeschicht mit einer der äußeren Glasscheibe verklebten Scheibe aus schlagfestem Kunststoff wie Polycarbonat, dadurch gekennzeichnet, daß eine Zwischenschicht auf der Seite, die der mit der schlagfesten Kunststoffscheibe versehenen Seite der äußeren Glasscheibe gegenüberliegt, eine solche Dicke und eine solche Zusammensetzung aufweist, daß sie während ihrer Kontraktion bei tiefer Temperatur auf die betreffende Seite der Glasscheibe Schubspannungen desselben Vorzeichens und derselben Größenordnung ausübt, wie sie auf der anderen Seite dieser Glasscheibe durch die gegebenenfalls mit einer Schutzschicht versehene Scheibe aus schlagfestem Kunststoff ausgeübt werden.

2. Sicherheitsglasscheibe nach Anspruch 1, dadurch gekennzeichnet, daß die Dicke der Zwischenschicht wenigstens die Hälfte der Dicke der Scheibe aus schlagfestem Kunststoff einschließlich der Dicke der die Verklebung zwischen der äußeren Glasscheibe und der Scheibe aus schlagfestem Kunststoff sicherstellenden Klebeschicht beträgt.

3. Sicherheitsglasscheibe nach einem der Ansprüche 1 oder 2, dadurch gekennzeichnet, daß die Verklebung zwischen der äußeren Glasscheibe und der Scheibe aus schlagfestem Kunststoff sicherstellende Klebeschicht aus transparentem thermoplastischem Polyurethan besteht.

4. Sicherheitsglasscheibe nach Anspruch 3, dadurch gekennzeichnet, daß die Verklebung zwischen der äußeren Glasscheibe und der Scheibe aus schlagfestem Kunststoff sicherstellende Klebeschicht eine Dicke von wenigstens 1,5 mm aufweist.

5. Sicherheitsglasscheibe nach einem der Ansprüche 1 bis 4, dadurch gekennzeichnet, daß die Zwischenschicht unmittelbar auf der mit der Scheibe aus schlagfestem Kunststoff versehenen Seite gegenüberliegenden Seite der nach innen gerichteten Glasscheibe angeordnet ist.

6. Sicherheitsglasscheibe nach Anspruch 5, dadurch gekennzeichnet, daß die Zwischenschicht die äußere Glasscheibe mit einer weiteren Glasscheibe verbindende Klebeschicht ist.

7. Sicherheitsglasscheibe nach Anspruch 6, dadurch gekennzeichnet, daß die Zwischenschicht eine Polyvinylbutyralfolie ist.

8. Sicherheitsglasscheibe nach Anspruch 6, dadurch gekennzeichnet, daß die Zwischenschicht eine Folie aus thermoplastischem Polyurethan ist.

9. Sicherheitsglasscheibe nach Anspruch 6, dadurch gekennzeichnet, daß die Glasscheiben mit Hilfe einer Scheibe miteinander verklebt sind, die eine auf beiden Seiten mit einer Schicht aus thermoplastischem Polyurethan versehene Platte aus Polycarbonat umfaßt.

10. Sicherheitsglasscheibe nach einem der Ansprüche 1 bis 9, dadurch gekennzeichnet, daß die Scheibe aus schlagfestem Kunststoff unter Zwischenschaltung einer Klebeschicht (16) aus Polyurethan mit einer Schicht (17) aus weichelastischem Polyurethan beschichtet ist.

**Fig.1**

**Fig.2**

**Fig.3**

31 32 33 34 35 16 17

3

**Fig.4**

41 42 43 44 45 16 17

4

**Fig.5**

51 52 53 54 55 56 57 58 59 16 17

5

61 62 63 64 65 66 67 16 17

6

*Fig.6*

71 72 73 74 75 76 77 16 17

7

5

*Fig.7*